# EUROPEAN PATENT SPECIFICATION

(11) **EP 3 802 226 B1**
(45) Date of publication and mention of the grant of the patent: **13.04.2022**
(21) Application number: 18734087.2
(22) Date of filing: 05.06.2018
(51) Int. Cl.: B60R 13/02

(54) **VEHICLE INTERIOR ASSEMBLY COMPRISING A SEAT BELT ASSEMBLY AND METHOD OF ASSEMBLING A VEHICLE INTERIOR ASSEMBLY**
FAHRZEUGINNENRAUMANORDNUNG MIT EINER SICHERHEITSGURTANORDNUNG UND VERFAHREN ZUM ZUSAMMENBAU EINER FAHRZEUGINNENRAUMANORDNUNG
ENSEMBLE INTÉRIEUR DE VÉHICULE COMPRENANT UN ENSEMBLE CEINTURE DE SÉCURITÉ ET PROCÉDÉ D'ASSEMBLAGE D'UN ENSEMBLE INTÉRIEUR DE VÉHICULE

(43) Date of publication of application: 14.04.2021
(73) Proprietor: Toyota Motor Europe, 1140 Brussels (BE)
(72) Inventor: COLAK, Isa, 1140 Brussels (BE)
(74) Representative: Cabinet Beau de Loménie
(86) International application number: PCT/EP2018/064792
(87) International publication number: WO 2019/233570

(56) References cited:
- GB-A- 2 398 547
- JP-A- 2010 023 804
- US-A1- 2008 054 703
- US-A1- 2016 001 739

## Description

### TECHNICAL FIELD

The present disclosure relates to a vehicle interior assembly comprising a seat belt assembly, and to a method of assembling a vehicle interior assembly.

### TECHNOLOGICAL BACKGROUND

Vehicle interior assemblies comprising a seat belt assembly are known in the art, for example from patent document US 2016/0001739 A1.

The vehicle interior assembly disclosed in patent document US 2016/0001739 A1 comprises a front wall portion including a seat belt outlet that is through the front wall portion in a vehicular front-rear direction. The seat belt outlet has an opening extending from a vehicular exterior side edge of the front wall portion toward a vehicular interior side edge of the front wall portion, and the seat belt outlet has a side opening that is open toward the vehicular exterior side at the vehicular exterior side edge and has a side opening edge. A guide portion is provided on the side opening edge of the seat belt outlet and guides the seat belt to the seat belt outlet.

To ensure that the above-mentioned guide portion is not seen by the occupant of the vehicle, a cover portion covers the guide portion from a vehicular front side. However, due to design and/or assembly considerations, it is not always desired to provide such a cover portion and/or to provide a seat belt outlet having an opening of the above-mentioned type. In such a case, there is a concern that, after assembly of the vehicle interior assembly, the appearance of the vehicle interior assembly will not be satisfactory for the occupant of the vehicle. There is therefore room for improvement in this respect.

### SUMMARY OF THE INVENTION

In this respect, the present disclosure relates to a vehicle interior assembly, comprising:
a seat belt assembly comprising a seat belt retractor and a seat belt drawn out from the seat belt retractor;
a vehicle interior support member, which is configured to support a portion of the seat belt; and
a vehicle interior cover member, which is mountable to a vehicle side wall so as to cover the seat belt retractor,
wherein the vehicle interior cover member comprises a first portion and the vehicle interior support member comprises a second portion facing the first portion, at least one of the first portion and the second portion being resilient such that the first portion and the second portion together define a slit through which the seat belt can pass,
wherein the first portion and the second portion comprise respective alignment portions configured to align the first portion and the second portion.

In the vehicle interior assembly described above, the first and second alignment portions ensure that the first portion and the second portion are properly aligned with each other after assembly of the vehicle interior assembly is completed. There is therefore no need for the worker to further manipulate the first portion and the second portion to bring them into their properly aligned positions. Further, there is no need to provide any extra member for hiding the first portion and the second portion from the view of the occupant of the vehicle. Thus, the vehicle interior assembly described above achieves an appearance which is satisfactory for the occupant of the vehicle while still being easy to assemble. In addition, the first and second alignment portions ensure that the first portion and the second portion remain properly aligned with each other even despite thermal cycling (e.g. due to sunlight exposure) and/or manipulation by the occupant of the vehicle (e.g. while cleaning the interior of the vehicle) of the first portion and the second portion. Thus, the vehicle interior assembly described above durably retains an appearance which is satisfactory for the occupant of the vehicle.

In certain embodiments, the respective alignment portions comprise:
a projection provided on one of the first portion and the second portion; and
a recess provided on the other one of the first portion and the second portion, the recess being configured to receive the projection.

In certain embodiments, the recess is provided on the first portion, and the projection is provided on the second portion.

In certain embodiments, the first portion is resilient.

According to the invention, a lower edge of the vehicle interior cover member in a vehicular vertical direction and an upper edge of the vehicle interior support member in the vehicular vertical direction together define a seat belt outlet, the seat belt extending through the seat belt outlet when the vehicle interior cover member is mounted to the vehicle side wall.

The present disclosure also relates to a vehicle comprising the above-described vehicle interior assembly.

The present disclosure also relates to a method of assembling a vehicle interior assembly, the method comprising:
mounting a seat belt assembly, the seat belt assembly comprising a seat belt retractor and a seat belt drawn out from the seat belt retractor;
providing a vehicle interior support member and a vehicle interior cover member, the vehicle interior support member being configured to support a portion of the seat belt, the vehicle interior cover member being mountable to a vehicle side wall so as to cover the seat belt retractor, and the vehicle interior support member and the vehicle interior cover member being secured to each other, wherein the vehicle interior cover member comprises a first portion and the vehicle interior support member comprises a second portion facing the first portion, at least one of the first portion and the second portion being resilient such that the first portion and the second portion together defining a slit through which the seat belt can pass, and wherein the first portion and the second portion comprise respective alignment portions configured to align the first portion and the second portion; and
mounting the vehicle interior cover member to the vehicle side wall, wherein mounting the vehicle interior cover member comprises moving the vehicle interior cover member toward the vehicle side wall and manipulating the seat belt so that the seat belt passes through the slit while the vehicle interior cover member is moved toward the vehicle side wall.

In certain embodiments, the respective alignment portions comprise:
a projection provided on one of the first portion and the second portion; and
a recess provided on the other one of the first portion and the second portion, the recess being configured to receive the projection.

In certain embodiments, the recess is provided on the first portion, and the projection is provided on the second portion.

In certain embodiments, the first portion is resilient.

In certain embodiments, a lower edge of the vehicle interior cover member in a vehicular vertical direction and an upper edge of the vehicle interior support member in the vehicular vertical direction together define a seat belt outlet, and the seat belt extends through the seat belt outlet after the vehicle interior cover member is mounted to the vehicle side wall.

The method provides the same advantages as set forth above for the above-described vehicle interior assembly. These advantages are therefore not repeated here in detail.

### BRIEF DESCRIPTION OF THE DRAWINGS

The invention and advantages thereof will be better understood upon reading the detailed description which follows, of embodiments of the invention given as non-limiting examples. This description refers to the appended drawings, wherein:
- Fig. 1 is a perspective view of a vehicle interior assembly;
- Fig. 2 is a front view of the vehicle interior assembly of Fig. 1;
- Fig. 3A and Fig. 3B are partial perspective views of the vehicle interior cover member, seen from opposite sides thereof;
- Fig. 3C is a partial perspective view of the vehicle interior cover member and the vehicle interior support member of the vehicle interior assembly;
- Fig. 3D is another partial perspective view of the vehicle interior cover member and the vehicle interior support member of the vehicle interior assembly;
- Fig. 4A, Fig. 4B and Fig. 4C are simplified front views similar to that of Fig. 2, illustrating how assembly of the vehicle interior assembly is completed by a worker.

### DETAILED DESCRIPTION OF EMBODIMENTS

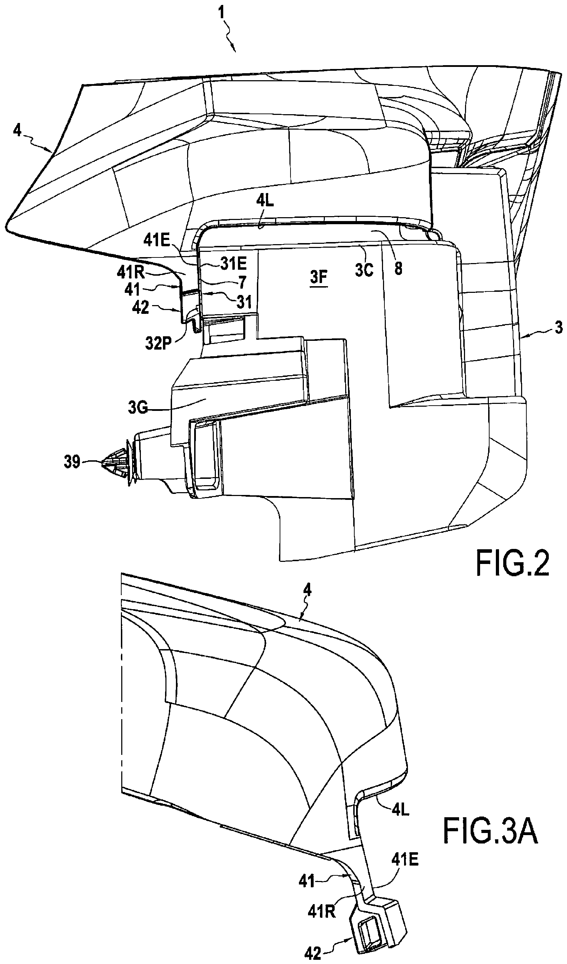

A vehicle interior assembly 1 will be described in detail hereinafter with reference to the appended drawings. The vehicle interior assembly 1 is configured so as to be installable in the passenger compartment of a vehicle (not shown). In the example shown on the drawings, the vehicle interior assembly 1 is a vehicle interior assembly for a vehicle rear seat, and more specifically a vehicle interior assembly for a vehicle rear right-hand-side seat. Thus, the left-right direction on Fig. 2 corresponds to the vehicular left-right direction, and the vehicle side wall (not shown) which is closest to the vehicle interior assembly 1 is on the left side of Fig. 2. In the following description, this vehicle side wall will simply be referred to as "the vehicle side wall". Further, the top-bottom direction on Fig. 2 corresponds to a vehicular vertical direction.

It goes without saying that the vehicle interior assembly 1 described hereinafter can equally be applied to a vehicle rear left-hand-side seat, provided that the geometries of its constitutive elements are appropriately adjusted.

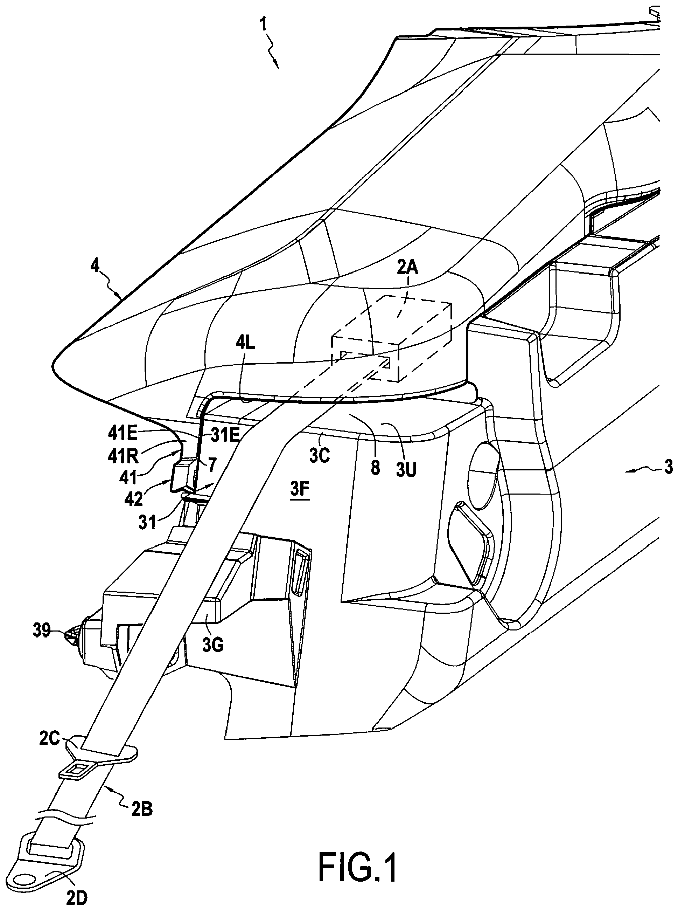

Fig. 1 and Fig. 2 show overall views of the vehicle interior assembly 1. As can be seen on these figures, the vehicle interior assembly 1 comprises a seat belt assembly 2, a vehicle interior support member 3, and a vehicle interior cover member 4. In the following description, the vehicle interior support member 3 will simply be referred to as "the support member 3", and the vehicle interior cover member 4 will simply be referred to as "the cover member 4".

The seat belt assembly 2 is of a known type, and, in the example shown here, is a known three-point seat belt assembly. Seat belt assemblies are well known in the field of vehicles and accordingly, their operation is not described in detail here. It is only mentioned here that the seat belt assembly 2 comprises a seat belt retractor 2A and a seat belt 2B. The seat belt retractor 2A is secured to the vehicle chassis (not shown), as is known. The seat belt 2B is drawn out from the seat belt retractor 2A at one end thereof, and is secured, at the other end thereof, to a seat belt retainer 2D, which itself is secured to the vehicle chassis (not shown), as is known. A seat belt buckle 2C is provided on the seat belt 2B, as is known.

The support member 3 is configured such that it can be secured to the vehicle chassis and/or to other vehicle interior members secured to the vehicle chassis (not shown). For example, the support member 3 may be secured to an adjacent vehicle interior member (not shown), e.g. by means of snap-fit mounting portions (not shown) which may be provided at a lower left end of support member 3. The support member 3 may further be secured to the vehicle side wall, e.g. by means of another snap-fit mounting portion 39 (shown on Fig. 1 and Fig. 2), which in the example shown is provided at a lower right end of the support member 3.

The support member 3 is configured to support a portion of the seat belt 2B. In the example shown here, an upper edge 3U (described in more detail later) of the support member 3 supports a portion of the seat belt 2B. Naturally, the portion of the seat belt 2B which is supported by the support member 3 varies depending on how much the seat belt 2B is drawn out from the seat belt retractor 2A.

In the example shown here, the support member 3 further comprises a rear seat mounting portion 3F to which the rear seat is to be mounted. A seat garnish support portion 3G may be provided on the rear seat mounting portion 3F in order to support a seat garnish (not shown) of the vehicle rear seat.

The cover member 4 is mountable to the vehicle side wall so as to cover the seat belt retractor 2A. In other words, the cover member 4 is configured such that, when it is mounted to the vehicle side wall, the seat belt retractor 2A is hidden (or at the very least mostly hidden) from the view of an occupant of the vehicle. The cover member 4 may comprise at least one mounting portion, such as a snap-fit mounting portion (not shown), which may be provided e.g. at a right-hand side of the cover member 4, for mounting to the vehicle side wall. In the example shown here, the support member 3 and the cover member 4 together constitute a deck side trim (also known as a side trim, deck cover, or luggage side cover), i.e., a vehicular interior side wall of a vehicular luggage room. The vehicle interior assembly 1 shown here may thus be called a deck side trim assembly.

The support member 3 and/or the cover member 4 may independently be made of a plastics material, e.g. made by injection molding of a plastics material having suitable mechanical properties. Manufacturing the support member 3 and/or the cover member 4 by injection molding conveniently makes it possible to give them relatively complex shapes, such as those shown on the drawings, at a low cost. In the example shown here, the support member 3 and the cover member 4 are separate parts which are mounted together, and accordingly the support member 3 and/or the cover member 4 comprise mounting portions (not shown), such as snap-fit mounting portions, for mounting to each other. In other examples (not shown), the support member 3 and the cover member 4 are made integrally with each other, e.g. by injection molding of a plastics material having suitable mechanical properties.

Fig. 1 shows the vehicle interior assembly 1 after its assembly (described later) is completed. After assembly of the vehicle interior assembly 1 is completed, the cover member 4 is mounted to the vehicle side wall (not shown). The cover member 4 and the support member 3 together define a seat belt outlet 8, and the seat belt 2B extends through the seat belt outlet 8. More specifically, a lower edge 4L of the cover member 4 in the vehicular vertical direction and an upper edge 3U of the support member 3 in the vehicular vertical direction together define the seat belt outlet 8. The seat belt outlet 8 is preferably elongated in the vehicular left-right direction, i.e., the seat belt outlet 8 is preferably larger (possibly 3, 5 or 10 times larger) in the vehicular left-right direction than in the vehicular vertical direction. In addition, the maximum dimension of the seat belt outlet 8 in the vehicular vertical direction is typically smaller than the thickness of the seat belt buckle 2C, thereby preventing the seat belt buckle 2C from being lost behind the support member 3.

As shown on Fig. 1, the lower edge 4L may be curved toward the rear of the vehicle moving toward the left in the vehicular left-right direction, i.e. moving toward the right side of Fig. 1. As shown on Fig. 1, the upper edge 3U may be flat or substantially flat, and is preferably parallel to the vehicle floor (not shown). In order to facilitate drawing out of the seat belt 2B, a chamfered or curved portion 3C may be provided on the support member 3 at the junction between the upper edge 3U and the rear seat mounting portion 3F.

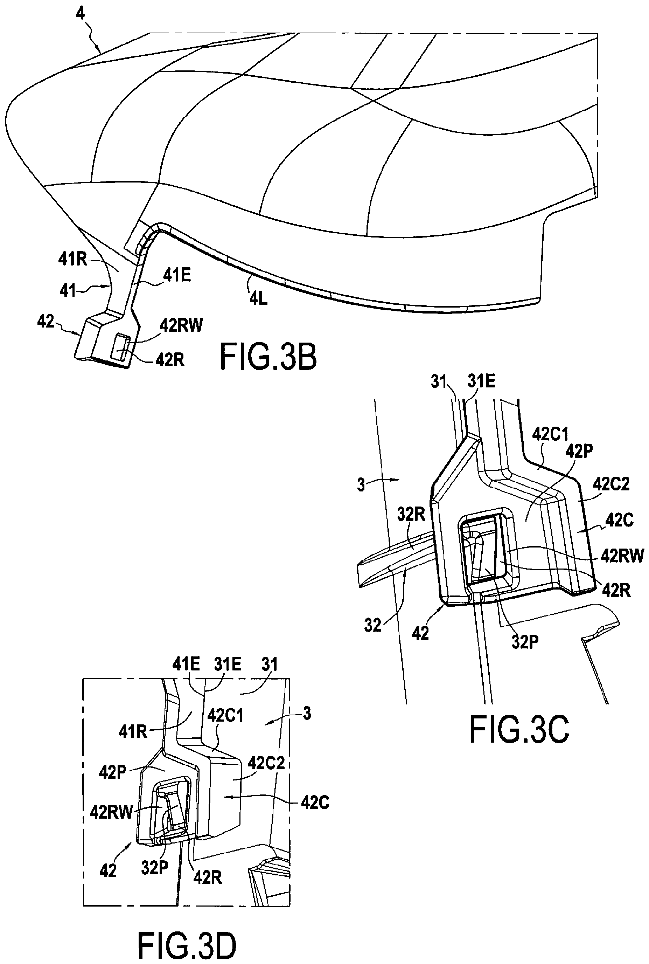

After assembly of the vehicle interior assembly 1 is completed, it is necessary that the seat belt 2B and the seat belt buckle 2C are in the proper position shown on Fig. 1, in order to ensure that the occupant of the vehicle can properly use the seat belt 2B. To ensure that the proper position of the seat belt 2B and the seat belt buckle 2C is achieved, the cover member 4 comprises a first portion 41, and the support member 3 comprises a second portion 31. The first portion 41 and the second portion 31 are described in more detail below with reference to Fig. 1 to Fig. 3D. It is to be noted that, in order to not complicate Fig. 3D, the vehicular rear direction side of the support member 3 (i.e., the side of the support member 3 which faces the seat belt retractor 2A) is not depicted on Fig. 3D.

The first portion 41 is provided on the cover member 4 in such a way that the second portion 31 faces the first portion 41. In the example shown, as can be seen on Fig. 1 to Fig. 3D, the first portion 41 is provided at a lower end of the cover member 4 in the vehicular vertical direction, and is lower in the vehicular vertical direction than the lower edge 4L described above. In addition, the first portion 41 is provided closer to the vehicle side wall (not shown) in the vehicular left-right direction that the second portion 31.

In the example shown, as can be seen more particularly on Fig. 1 and Fig. 2, the second portion 31 is provided at a rightmost edge of the support member 3 in the vehicular left-right direction.

The first portion 41 is resilient such that the first portion 41 and the second portion 31 together define a slit 7. The slit 7 is configured such that the seat belt 2B can pass therethrough, as will be explained more in detail later. In the example shown, the slit 7 is defined by a rightmost edge 31E of the second portion 31 and a leftmost edge 41E of the first portion 41. Preferably, the edges 31E and 41E are straight and parallel to each other as shown on Fig. 2.

In the example shown, the first portion 41 is resilient due to the resilient portion 41R, which is provided between the main body of the cover member 4 and a first alignment portion 42 which will be described later. The resilient portion 41R may be made of a plastics material, and is preferably made integrally with the cover member 4 and the later-described first alignment portion 42 by injection molding of a plastics material having a suitable degree of flexibility and resiliency, such as polypropylene (PP) or acrylonitrile butadiene styrene (ABS).

In the example shown, the second portion 31 is integral with the rear seat mounting portion 3F. The second portion 31 and the rear seat mounting portion 3F may be made of a plastics material, and are preferably made integrally with the support member 3 by injection molding of a plastics material having a suitable degree of rigidity, such as polypropylene (PP) or acrylonitrile butadiene styrene (ABS). In the example shown, the second portion 31 is not resilient or substantially less resilient than the first portion 41, e.g. due to the second portion 31 being substantially thicker and/or made of a more rigid material than the resilient portion 41R.

As briefly mentioned above, the first portion 41 further comprises a first alignment portion 42. In the example shown, the first alignment portion 42 is provided at the bottom part of the first portion 41 in the vehicular vertical direction. Therefore, the resilient portion 41R is provided between the main body of the cover member 4 and the first alignment portion 42. As a result, due to the resiliency of the resilient portion 41R, the first alignment portion 42 may be resiliently moved relative to the main body of the cover member 4, as will be explained more in detail later.

In the example shown, as can be seen on Fig. 3A to Fig. 3D, the first alignment portion 42 comprises a plate-shaped portion 42P. The plate-shaped portion 42P extends perpendicularly or substantially perpendicularly to the resilient portion 41R. Further, as can be seen on Fig. 3C and Fig. 3D, the plate-shaped portion 42P extends across both sides of the leftmost edge 41E of the first portion 41.

The plate-shaped portion 42P comprises a recess 42R. As can be seen on Fig. 3C and Fig. 3D, the recess 42R is appropriately shaped so as to receive the projection 32P when the resilient portion 41R is not deformed, i.e. when the first alignment portion 42 is in its normal, non-deflected position. In other words, when the first alignment portion 42 is in its normal, non-deflected position, the recess 42R engages the projection 32P, thereby aligning the first portion 41 with the second portion 31. In order to facilitate engagement of the projection 32P with the recess 42R, one or more walls 42RW of the recess 42R may be angled such that the recess 42R widens going towards the vehicle side wall in the vehicular left-right direction.

Although, in the example shown on the drawings, the recess 42R extends across the entire thickness of the plate-shaped portion 42P, this is not necessary, and the recess 42R may extend across only a part of the thickness of the plate-shaped portion 42P.

The first alignment portion 42 optionally further comprises a ridge portion 42C as shown on Fig. 3A to Fig. 3D. The ridge portion 42C comprises a first ridge portion 42C1 and a second ridge portion 42C2. The first ridge portion 42C1 is angled, i.e., the first ridge portion 42C1 extends at an angle from the resilient portion 41R. The second ridge portion 42C2 extends in parallel or substantially in parallel to the resilient portion 41R. The first ridge portion 42C1 and the second ridge portion 42C2 extend perpendicularly or substantially perpendicularly to the plate-shaped portion 42P. In the example shown, the ridge portion 42C has the same width or substantially the same width as the resilient portion 41R in the vehicular left-right direction, while the plate-shaped portion 42P is substantially less wide in the vehicular left-right direction than the resilient portion 41R. The ridge portion 42C and the plate-shaped portion 42P are preferably integral with each other, and are preferably made integrally with the cover member 4 and the resilient portion 41R as already discussed above. In other examples (not shown), the ridge portion 42C may be omitted. In yet other examples (not shown), the first ridge portion 42C1 may be not angled, i.e., the first ridge portion 42C1 may extend in the same direction as the second ridge portion 42C2.

Further, the second portion 31 further comprises a second alignment portion 32. In the example shown, as best seen on Fig. 3C, the second alignment portion 32 comprises a projection 32P. The projection 32P protrudes beyond the rightmost edge 31E. The projection 32P may be formed into a substantially triangular shape, for example into a substantially rectangular triangle shape, with the right angle of the rectangular triangle being opposite from the edge 31E as shown on Fig. 2 and Fig. 3C. However, the projection 32P may be formed into other shapes, provided that the projection 32P can be received into the recess 42R. Also, although, in the example shown on the drawings, the recess 42R is formed into a substantially rectangular shape, the recess 42R may be formed into other shapes, provided that the projection 32P can be received into the recess 42R.

The second alignment portion 32 optionally further comprises a rib 32R. The rib 32R is elongated, and extends from the second portion 31 on the vehicular rear direction side of the support member 3 (i.e., the side of the support member 3 which faces the seat belt retractor 2A (i.e., the left side of Fig. 3C)). The projection 32P extends from the rib 32R. Preferably, the rib 32R extends perpendicularly or substantially perpendicularly from the rightmost edge 31E of the second portion 31. The rib 32R may increase the rigidity of the second portion 31. The rib 32R is typically made integrally with the second portion 31, e.g. by injection molding of a plastics material as has already been described above.

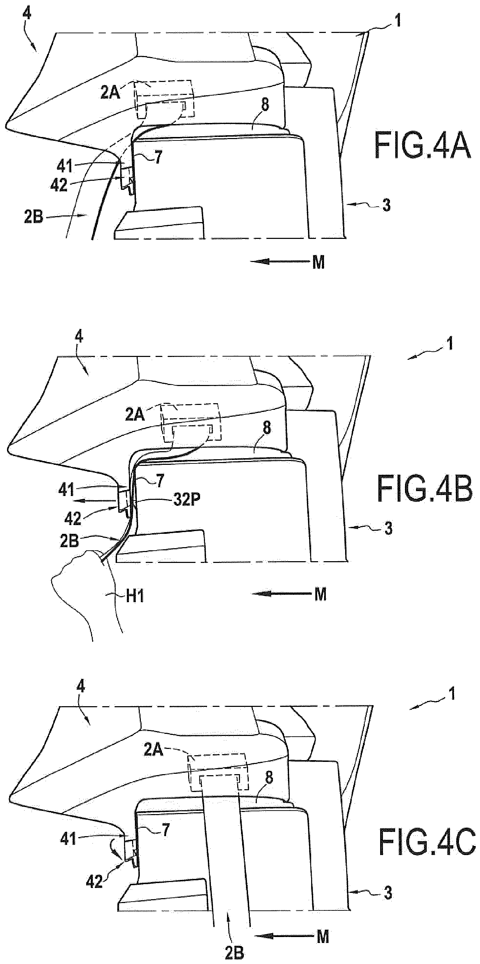

There will now be described a method of assembling the vehicle interior assembly 1, with reference to Fig. 4A to Fig. 4C.

The method of assembling the vehicle interior assembly 1 is usually performed by a worker working on a vehicle assembly line. Initially, the vehicle is in a partially constructed condition in which at least the vehicle chassis and the vehicle side wall on the side of the vehicle where the vehicle interior assembly 1 is to be assembled have been constructed and assembled. The method comprises mounting the seat belt assembly 2 onto the vehicle chassis, as is known. After the seat belt assembly 2 is mounted and before the support member 3 and the cover member 4 are mounted, the seat belt retractor 2A is exposed to the passenger compartment of the vehicle.

The method then comprises providing the above-described support member 3 and cover member 4. As discussed above, the support member 3 and the cover member 4 are separate parts mounted together, or are made integrally with each other. In other words, the support member 3 and the cover member 4 are secured to each other. Thus, the support member 3 and the cover member 4 are provided as an assembly which can be handled by the worker as a single element. Typically, several such identical assemblies are provided to the worker in a storage area near the assembly line, so that the worker only needs to grasp one of these assemblies with his hands and carry it over to the vehicle.

The method then comprises mounting the cover member 4 to the vehicle side wall (not shown). Mounting the cover member 4 to the vehicle side wall comprises moving the cover member 4 toward the vehicle side wall (i.e., in the direction shown by the arrow M on Fig. 4A to Fig. 4C). Since the support member 3 and the cover member 4 are secured to each other as discussed above, moving the cover member 4 yields an identical movement of the support member 3. Accordingly, any description of the movement of the support member 3 is omitted in the following.

It is particularly convenient that the cover member 4 (and, even more preferably, the support member 3 as well) comprises mounting portions of the snap-fit type as mentioned earlier, as in this case, the worker only needs to bring the cover member 4 into the appropriate position to mount the cover member 4 to the vehicle side wall.

The method further comprises manipulating the seat belt 2B while the cover member 4 is moved toward the vehicle side wall (not shown). Indeed, as will be understood from Fig. 1 and Fig. 4C, the seat belt assembly 2 is already mounted in its final position. Meanwhile, as discussed above, the support member 3 and the cover member 4 are secured to each other. As a result, during assembly of the vehicle interior assembly 1, the seat belt 2B is manipulated so as to achieve its proper position shown on Fig. 1. Thus, more specifically, the method comprises manipulating the seat belt 2B such that the seat belt 2B passes through the slit 7 while the cover member 4 is moved toward the vehicle side wall in the direction shown by the arrow M. This will be better understood by considering Fig. 4B and Fig. 4C together with the following description.

As mentioned above, at this stage in the method, the seat assembly 2 is already mounted in its final position. Thus, at least at one point in time while he mounts the cover member 4, the worker is able to use one of his hands (in the example shown, his left hand, which is labelled as H1 on Fig. 4B) to grasp the seat belt 2B. Once the worker has grasped the seat belt 2B, he may then manipulate the seat belt 2B such that the seat belt 2B arrives at the slit 7 defined by the first portion 41 and the second portion 31, and engages the first portion 41. It is now recalled that, as mentioned above, the first portion 41 is resilient due to the resilient portion 41R which is provided between the main body of the cover member 4 and the first alignment portion 42. Thus, when the seat belt 2B engages the first portion 41 as a result of the worker's manipulation, the resilient portion 41R deforms such that the first portion 41 and the first alignment portion 42 move away from the second portion 31. Thereby, the slit 7 opens, allowing the seat belt 2B to pass through the slit 7 as shown on Fig. 4B.

The worker may then continue to manipulate the seat belt 2B until the seat belt 2B arrives at its proper position in the seat belt outlet 8, while still moving the cover member 4 in the direction shown by the arrow M toward the vehicle side wall (not shown). Notably, as soon as the seat belt 2B has passed through the slit 7, the resilient portion 41R flexes back to its original position. Consequently, the first alignment portion 42, which is connected to the resilient portion 41R as mentioned above, also reverts to its original position as illustrated on Fig. 4C. Therefore, the first alignment portion 42 again faces the second alignment portion 32, and the projection 32P again engages the recess 42R. As a result, the first alignment portion 42 and the second alignment portion 32 again align the first portion 41 and the second portion 31. Thereby, the first portion 41 and the second portion 31 are properly aligned with each other. Finally, the worker finishes moving the cover member 4 toward the vehicle side wall (not shown) until it reaches its final assembly position. At this point, the worker finishes mounting the cover member 4 to the vehicle side wall (not shown). Since, as mentioned above, the support member 3 is secured to the cover member 4, the support member 3 also reaches its final assembly position. Thus, at this point, the worker also finishes mounting the support member 3. Assembly of the vehicle interior assembly 1 is thereby completed.

It should be noted that in order to achieve proper alignment of the first portion 41 and the second portion 31 and proper positioning of the seat belt 2B in the seat belt outlet 8, the worker only needs to manipulate the seat belt 2B as described above; the resiliency of the resilient portion 41R and the first and second alignment portions 42, 32 together cooperate to align the first portion 41 and the second portion 31 once the seat belt 2B has passed through the slit 7. And as mentioned above, in order to manipulate the seat belt 2B, the worker only needs to use one of his hands, his other hand being still available to manipulate the cover member 4. Thus, the worker is able to complete the assembly of the vehicle interior assembly 1 on his own, using only his hands and without exterior assistance from another worker and/or from extra tools. This greatly facilitates the assembly of the vehicle interior assembly 1 while ensuring that the seat belt 2B is properly positioned after assembly.

Further, the first and second alignment portions 42, 32 ensure that the first portion 41 and the second portion 31 are properly aligned with each other after assembly of the vehicle interior assembly 1 is completed. There is therefore no need for the worker to further manipulate the first portion 41 and the second portion 31 to bring them into their properly aligned positions. Further, there is no need to provide any extra member for hiding the first portion 41 and the second portion 31 from the view of the occupant of the vehicle. In addition, the first and second alignment portions 42, 31 ensure that the first portion 41 and the second portion 31 remain properly aligned with each other even despite thermal cycling (e.g. due to sunlight exposure) and/or manipulation by the occupant of the vehicle (e.g. while cleaning the interior of the vehicle) of the first portion 41 and the second portion 31.

There has been described above an example in which the first portion 41 is resilient, due to the resilient portion 41R being provided. However, only the second portion 31 may be resilient, or the first portion 41 and the second portion 31 may both be resilient, provided that the first portion 41 and the second portion 31 define a slit 7 through which the seat belt 2B can pass.

There has been described above an example in which a first alignment portion comprising a recess is provided on the first portion 41, and a second alignment portion comprising a projection is provided on the second portion 31. However, this configuration may be reversed, i.e., the first alignment portion comprising a recess may be provided on the second portion 31, and the second alignment portion comprising a projection may be provided on the first portion 41.

In addition, although there has been described above an example in which the respective alignment portions comprise a projection and a recess configured to receive the projection, the respective alignment portions may be constructed differently, provided that the respective alignment portions align the first portion 41 and the second portion 31. For example, in some embodiments (not shown), instead of the projection and the recess or in addition to the projection and the recess, the respective alignment portions may each comprise a permanent magnet, the permanent magnets aligning the first portion 41 and the second portion 31 after the seat belt 2B has passed through the slit 7. In other embodiments (not shown), instead of the projection and the recess or in addition to the projection and the recess, the respective alignment portions may each comprise a hook-and-loop fastener, the hook-and-loop fasteners aligning the first portion 41 and the second portion 31 after the seat belt 2B has passed through the slit 7.

Although the present invention has been described by referring to specific exemplary embodiments, modifications may be provided to these examples without the departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

It also goes without saying that any features described with reference to a method are applicable, alone or in combination, to a product or an apparatus, and that conversely, any features described with reference to a product or an apparatus are applicable, alone or in combination, to a method.

## Claims

1. A vehicle interior assembly (1), comprising:
a seat belt assembly (2) comprising a seat belt retractor (2A) and a seat belt (2B) drawn out from the seat belt retractor (2A);
a vehicle interior support member (3), which is configured to support a portion of the seat belt (2B); and
a vehicle interior cover member (4), which is mountable to a vehicle side wall so as to cover the seat belt retractor (2A),
wherein the vehicle interior cover member (4) comprises a first portion (41) and the vehicle interior support member (3) comprises a second portion (31) facing the first portion (41), at least one of the first portion (41) and the second portion (31) being resilient such that the first portion (41) and the second portion (31) together define a slit (7) through which the seat belt (2B) can pass,
wherein the first portion (41) and the second portion (31) comprise respective alignment portions (42, 32) configured to align the first portion (41) and the second portion (31), **characterized in that** a lower edge (4L) of the vehicle interior cover member (4) in a vehicular vertical direction and an upper edge (3U) of the vehicle interior support member (3) in the vehicular vertical direction together define a seat belt outlet (8), the seat belt (2B) extending through the seat belt outlet (8) when the vehicle interior cover member (4) is mounted to the vehicle side wall.

2. The vehicle interior assembly (1) as claimed in claim 1, wherein the respective alignment portions (42, 32) comprise:
a projection (32P) provided on one of the first portion and the second portion; and
a recess (42R) provided on the other one of the first portion and the second portion, the recess (42R) being configured to receive the projection (32P).

3. The vehicle interior assembly (1) as claimed in claim 2, wherein the recess (42R) is provided on the first portion (41), and the projection (32P) is provided on the second portion (31).

4. The vehicle interior assembly (1) as claimed in any one of claims 1 to 3, wherein the first portion (41) is resilient.

5. A vehicle comprising the vehicle interior assembly (1) as claimed in any one of claims 1 to 4.

6. A method of assembling a vehicle interior assembly (1), the method comprising:
mounting a seat belt assembly (2), the seat belt assembly (2) comprising a seat belt retractor (2A) and a seat belt (2B) drawn out from the seat belt retractor (2A);
providing a vehicle interior support member (3) and a vehicle interior cover member (4), the vehicle interior support member (3) being configured to support a portion of the seat belt (2B), the vehicle interior cover member (4) being mountable to a vehicle side wall so as to cover the seat belt retractor (2A), and the vehicle interior support member (3) and the vehicle interior cover member (4) being secured to each other, wherein the vehicle interior cover member (4) comprises a first portion (41) and the vehicle interior support member (3) comprises a second portion (31) facing the first portion (41), at least one of the first portion (41) and the second portion (31) being resilient such that the first portion (41) and the second portion (31) together defining a slit (7) through which the seat belt (2B) can pass, and wherein the first portion (41) and the second portion (31) comprise respective alignment portions (42, 32) configured to align the first portion (41) and the second portion (31); and
mounting the vehicle interior cover member (4) to the vehicle side wall, wherein mounting the vehicle interior cover member (4) comprises moving the vehicle interior cover member (4) toward the vehicle side wall and manipulating the seat belt (2B) so that the seat belt (2B) passes through the slit (7) while the vehicle interior cover member (4) is moved toward the vehicle side wall, **characterized in that** a lower edge (4L) of the vehicle interior cover member (4) in a vehicular vertical direction and an upper edge (3U) of the vehicle interior support member (3) in the vehicular vertical direction together define a seat belt outlet (8), and wherein the seat belt (2B) extends through the seat belt outlet (8) after the vehicle interior cover member (4) is mounted to the vehicle side wall.

7. The method of assembling a vehicle interior assembly (1) as claimed in claim 6, wherein the respective alignment portions (42, 32) comprise:
a projection (32P) provided on one of the first portion and the second portion; and
a recess (42R) provided on the other one of the first portion and the second portion, the recess (42R) being configured to receive the projection (32P).

8. The method of assembling a vehicle interior assembly (1) as claimed in claim 7, wherein the recess (42R) is provided on the first portion (41), and the projection (32P) is provided on the second portion (31).

9. The method of assembling a vehicle interior assembly (1) as claimed in any one of claims 6 to 8, wherein the first portion (41) is resilient.

## Patentansprüche

1. Fahrzeuginnenraum-Anordnung (1), umfassend:
eine Sicherheitsgurt-Anordnung (2), umfassend einen Sicherheitsgurt-Aufroller (2A) und einen Sicherheitsgurt (2B), der aus dem Sicherheitsgurt-Aufroller (2A) herausgezogen wird,
ein Fahrzeuginnenraum-Stützelement (3), das dazu ausgestaltet ist, eine Sektion des Sicherheitsgurts (2B) zu stützen, und
ein Fahrzeuginnenraum-Abdeckelement (4), das an einer Fahrzeugseitenwand montiert werden kann, um den Sicherheitsgurt-Aufroller (2A) abzudecken,
wobei das Fahrzeuginnenraum-Abdeckelement (4) eine erste Sektion (41) umfasst und das Fahrzeuginnenraum-Stützelement (3) eine zweite Sektion (31) umfasst, die der ersten Sektion (41) zugewandt ist, wobei zumindest eine von der ersten Sektion (41) und der zweiten Sektion (31) elastisch ist, so dass die erste Sektion (41) und die zweite Sektion (31) zusammen einen Schlitz (7) definieren, durch welchen der Sicherheitsgurt (2B) laufen kann,
wobei die erste Sektion (41) und die zweite Sektion (31) jeweilige Ausrichtungssektionen (42, 32) umfassen, die dazu ausgestaltet sind, die erste Sektion (41) und die zweite Sektion (31) auszurichten, **dadurch gekennzeichnet, dass** ein unterer Rand (4L) des Fahrzeuginnenraum-Abdeckelements (4) in einer vertikalen Fahrzeugrichtung und ein oberer Rand (3U) des Fahrzeuginnenraum-Stützelements (3) in der vertikalen Fahrzeugrichtung zusammen einen Sicherheitsgurt-Auslass (8) definieren, wobei sich der Sicherheitsgurt (2B) durch den Sicherheitsgurt-Auslass (8) erstreckt, wenn das Fahrzeuginnenraum-Abdeckelement (4) an der Fahrzeug-Seitenwand montiert ist.

2. Fahrzeuginnenraum-Anordnung (1) nach Anspruch 1, wobei die jeweiligen Ausrichtungssektionen (42, 32) umfassen:
einen Vorsprung (32P), der an einer von der ersten Sektion und der zweiten Sektion vorgesehen ist, und
einen Rücksprung (42R), der an der anderen von der ersten Sektion und der zweiten Sektion vorgesehen ist, wobei der Rücksprung (42R) dazu ausgestaltet ist, den Vorsprung (32P) aufzunehmen.

3. Fahrzeuginnenraum-Anordnung (1) nach Anspruch 2, wobei der Rücksprung (42R) an der ersten Sektion (41) vorgesehen ist und der Vorsprung (32P) an der zweiten Sektion (31) vorgesehen ist.

4. Fahrzeuginnenraum-Anordnung (1) nach einem der Ansprüche 1 bis 3, wobei die erste Sektion (41) elastisch ist.

5. Fahrzeug, umfassend die Fahrzeuginnenraum-Anordnung (1) nach einem der Ansprüche 1 bis 4.

6. Verfahren zum Zusammenbauen einer Fahrzeuginnenraum-Anordnung (1), wobei das Verfahren umfasst:
Montieren einer Sicherheitsgurt-Anordnung (2), wobei die Sicherheitsgurt-Anordnung (2) einen Sicherheitsgurt-Aufroller (2A) und einen Sicherheitsgurt (2B) umfasst, der aus dem Sicherheitsgurt-Aufroller (2A) herausgezogen wird,
Bereitstellen eines Fahrzeuginnenraum-Stützelements (3) und eines Fahrzeuginnenraum-Abdeckelements (4), wobei das Fahrzeuginnenraum-Stützelement (3) dazu ausgestaltet ist, eine Sektion des Sicherheitsgurts (2B) zu stützen, wobei das Fahrzeuginnenraum-Abdeckelement (4) an einer Fahrzeug-Seitenwand montiert werden kann, um den Sicherheitsgurt-Aufroller (2A) abzudecken, und das Fahrzeuginnenraum-Stützelement (3) und das Fahrzeuginnenraum-Abdeckelement (4) aneinander gesichert werden, wobei das Fahrzeuginnenraum-Abdeckelement (4) eine erste Sektion (41) umfasst und das Fahrzeuginnenraum-Stützelement (3) eine zweite Sektion (31) umfasst, die der ersten Sektion (41) zugewandt ist, wobei zumindest eine von der ersten Sektion (41) und der zweiten Sektion (31) elastisch ist, so dass die erste Sektion (41) und die zweite Sektion (31) zusammen einen Schlitz (7) definieren, durch welchen der Sicherheitsgurt (2B) laufen kann, und wobei die erste Sektion (41) und die zweite Sektion (31) jeweilige Ausrichtungssektionen (42, 32) umfassen, die dazu ausgestaltet sind, die erste Sektion (41) und die zweite Sektion (31) auszurichten, und
Montieren des Fahrzeuginnenraum-Abdeckelements (4) an der Fahrzeug-Seitenwand, wobei das Montieren des Fahrzeuginnenraum-Abdeckelements (4) das Bewegen des Fahrzeuginnenraum-Abdeckelements (4) zu der Fahrzeug-Seitenwand hin und das Manipulieren des Sicherheitsgurts (2B) umfasst, so dass der Sicherheitsgurt (2B) durch den Schlitz (7) läuft, während das Fahrzeuginnenraum-Abdeckelement (4) zu der Fahrzeug-Seitenwand hin bewegt wird, **dadurch gekennzeichnet, dass** ein unterer Rand (4L) des Fahrzeuginnenraum-Abdeckelements (4) in einer vertikalen Fahrzeugrichtung und ein oberer Rand (3U) des Fahrzeuginnenraum-Stützelements (3) in der vertikalen Fahrzeugrichtung zusammen einen Sicherheitsgurt-Auslass (8) definieren, und wobei sich der Sicherheitsgurt (2B) durch den Sicherheitsgurt-Auslass (8) erstreckt, nachdem das Fahrzeuginnenraum-Abdeckelement (4) an der Fahrzeug-Seitenwand montiert wurde.

7. Verfahren zum Zusammenbauen einer Fahrzeuginnenraum-Anordnung (1) nach Anspruch 6, wobei die jeweiligen Ausrichtungssektionen (42, 32) umfassen:
einen Vorsprung (32P), der an einer von der ersten Sektion und der zweiten Sektion vorgesehen ist, und
einen Rücksprung (42R), der an der anderen von der ersten Sektion und der zweiten Sektion vorgesehen ist, wobei der Rücksprung (42R) dazu ausgestaltet ist, den Vorsprung (32P) aufzunehmen.

8. Verfahren zum Zusammenbauen einer Fahrzeuginnenraum-Anordnung (1) nach Anspruch 7, wobei der Rücksprung (42R) an der ersten Sektion (41) vorgesehen ist und der Vorsprung (32P) an der zweiten Sektion (31) vorgesehen ist.

9. Verfahren zum Zusammenbauen einer Fahrzeuginnenraum-Anordnung (1) nach einem der Ansprüche 6 bis 8, wobei die erste Sektion (41) elastisch ist.

## Revendications

1. Ensemble intérieur de véhicule (1), comprenant :
un ensemble de ceinture de sécurité (2) comprenant un rétracteur de ceinture de sécurité (2A) et une ceinture de sécurité (2B) tirée hors du rétracteur de ceinture de sécurité (2A) ;
un élément de support intérieur de véhicule (3), qui est configuré pour supporter une partie de la ceinture de sécurité (2B) ; et
un élément de recouvrement intérieur de véhicule (4), qui peut être monté sur une paroi latérale de véhicule de façon à recouvrir le rétracteur de ceinture de sécurité (2A),
dans lequel l'élément de recouvrement intérieur de véhicule (4) comprend une première partie (41) et l'élément de support intérieur de véhicule (3) comprend une deuxième partie (31) faisant face à la première partie (41), au moins une de la première partie (41) et de la deuxième partie (31) étant élastique de telle sorte que la première partie (41) et la deuxième partie (31) définissent ensemble une fente (7) à travers laquelle la ceinture de sécurité (2B) peut passer,
dans lequel la première partie (41) et la deuxième partie (31) comprennent des parties d'alignement respectives (42, 32) configurées pour aligner la première partie (41) et la deuxième partie (31), **caractérisé en ce que** un bord inférieur (4L) de l'élément de recouvrement intérieur de véhicule (4) dans une direction verticale de véhicule et un bord supérieur (3U) de l'élément de support intérieur de véhicule (3) dans la direction verticale de véhicule définissent ensemble une sortie de ceinture de sécurité (8), la ceinture de sécurité (2B) s'étendant à travers la sortie de ceinture de sécurité (8) quand l'élément de recouvrement intérieur de véhicule (4) est monté sur la paroi latérale de véhicule.

2. Ensemble intérieur de véhicule (1) selon la revendication 1, dans lequel les parties d'alignement respectives (42, 32) comprennent :
une saillie (32P) prévue sur l'une de la première partie et de la deuxième partie ; et
un renfoncement (42R) prévu sur l'autre de la première partie et de la deuxième partie, le renfoncement (42R) étant configuré pour recevoir la saillie (32P).

3. Ensemble intérieur de véhicule (1) selon la revendication 2, dans lequel le renfoncement (42R) est prévu sur la première partie (41), et la saillie (32P) est prévu sur la deuxième partie (31).

4. Ensemble intérieur de véhicule (1) selon l'une quelconque des revendications 1 à 3, dans lequel la première partie (41) est élastique.

5. Véhicule comprenant l'ensemble intérieur de véhicule (1) selon l'une quelconque des revendications 1 à 4.

6. Procédé d'assemblage d'un ensemble intérieur de véhicule (1), le procédé comprenant:
le montage d'un ensemble de ceinture de sécurité (2), l'ensemble de ceinture de sécurité (2) comprenant un rétracteur de ceinture de sécurité (2A) et une ceinture de sécurité (2B) tirée hors du rétracteur de ceinture de sécurité (2A) ;
la fourniture d'un élément de support intérieur de véhicule (3) et d'un élément de recouvrement intérieur de véhicule (4), l'élément de support intérieur de véhicule (3) étant configuré pour supporter une partie de la ceinture de sécurité (2B), l'élément de recouvrement intérieur de véhicule (4) pouvant être monté sur une paroi latérale de véhicule de façon à recouvrir le rétracteur de ceinture de sécurité (2A), et l'élément de support intérieur de véhicule (3) et l'élément de recouvrement intérieur de véhicule (4) étant fixés l'un à l'autre, dans lequel l'élément de recouvrement intérieur de véhicule (4) comprend une première partie (41) et l'élément de support intérieur de véhicule (3) comprend une deuxième partie (31) faisant face à la première partie (41), au moins une de la première partie (41) et de la deuxième partie (31) étant élastique de telle sorte que la première partie (41) et la deuxième partie (31) définissent ensemble une fente (7) à travers laquelle la ceinture de sécurité (2B) peut passer, et dans lequel la première partie (41) et la deuxième partie (31) comprennent des parties d'alignement respectives (42, 32) configurées pour aligner la première partie (41) et la deuxième partie (31) ; et
le montage de l'élément de recouvrement intérieur de véhicule (4) sur la paroi latérale de véhicule, dans lequel le montage de l'élément de recouvrement intérieur de véhicule (4) comprend le déplacement de l'élément de recouvrement intérieur de véhicule (4) vers la paroi latérale de véhicule et la manipulation de la ceinture de sécurité (2B) de telle sorte que la ceinture de sécurité (2B) passe à traverse la fente (7) alors que l'élément de recouvrement intérieur de véhicule (4) est déplacé vers la paroi latérale de véhicule, **caractérisé en ce que** un bord inférieur (4L) de l'élément de recouvrement intérieur de véhicule (4) dans une direction verticale de véhicule et un bord supérieur (3U) de l'élément de support intérieur de véhicule (3) dans la direction verticale de véhicule définissent ensemble une sortie de ceinture de sécurité (8), et dans lequel la ceinture de sécurité (2B) s'étend à travers la sortie de ceinture de sécurité (8) une fois que l'élément de recouvrement intérieur de véhicule (4) est monté sur la paroi latérale de véhicule.

7. Procédé d'assemblage d'un ensemble intérieur de véhicule (1) selon la revendication 6, selon lequel les parties d'alignement respectives (42, 32) comprennent :
une saillie (32P) prévue sur l'une de la première partie et de la deuxième partie ; et
un renfoncement (42R) prévu sur l'autre de la première partie et de la deuxième partie, le renfoncement (42R) étant configuré pour recevoir la saillie (32P).

8. Procédé d'assemblage d'un ensemble intérieur de véhicule (1) selon la revendication 7, selon lequel le renfoncement (42R) est prévu sur la première partie (41), et la saillie (32P) est prévue sur la deuxième partie (31).

9. Procédé d'assemblage d'un ensemble intérieur de véhicule (1) selon l'une quelconque des revendications 6 à 8, selon lequel la première partie (41) est élastique.
